# EUROPEAN PATENT APPLICATION

(11) **EP 3 142 333 A1**
(43) Date of publication of application: **15.03.2017**
(21) Application number: 14895394.6
(22) Date of filing: 18.06.2014
(51) Int. Cl.: H04L 29/08

(54) **DATA PROCESSING APPARATUS AND DATA PROCESSING METHOD**

(71) Applicant: Huawei Technologies Co., Ltd., Longgang District Shenzhen, Guangdong 518129 (CN)
(72) Inventor: HUANG, Gang, Shenzhen Guangdong 518129 (CN); LIANG, Wenliang, Shenzhen Guangdong 518129 (CN); TANG, Chen, Shenzhen Guangdong 518129 (CN)
(74) Representative: Pfenning, Meinig & Partner mbB
(86) International application number: PCT/CN2014/080238
(87) International publication number: WO 2015/192345

(57) **Abstract**

A data processing apparatus and a data processing method are provided. The data processing apparatus includes a data processing module (30), a switching module (31), and a scheduling module (32). The scheduling module (32) coordinates a quantity of tasks corresponding to each data processing module. When a quantity of to-be-processed tasks corresponding to any data processing module (30) reaches a preset threshold, the scheduling module (32) instructs the switching module (31) to send task data received by the foregoing any data processing module (30) to a data processing module (30) whose quantity of to-be-processed tasks does not reach the preset threshold for processing. In the foregoing technical solution, each general-purpose server corresponds to one data processing module (30). When a quantity of tasks corresponding to a data processing module (30) is relatively large, the scheduling module (32) controls the switching module (31) to dispatch task data to a relatively idle data processing module (30), thereby avoiding a problem of system resource waste.

## Description

### TECHNICAL FIELD

The present invention relates to the field of data processing technologies, and in particular, to a data processing apparatus and a data processing method.

### BACKGROUND

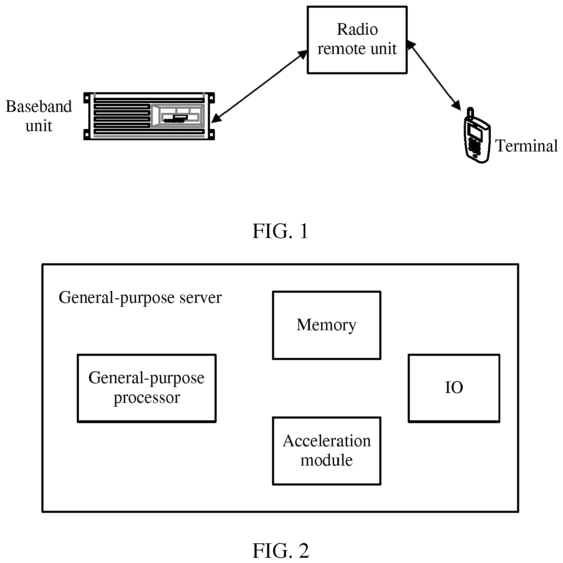

With universal application of mobile communications services, an amount of data that needs to be processed by a base station significantly increases. Referring to FIG. 1, an existing base station includes two parts, that is, a BBU (Building Base band unit, base band unit) and an RRU (Radio remote unit, radio remote unit), where the BBU is mainly configured to process data received by the base station; and the RRU is mainly configured to transmit and receive a radio frequency signal.

Currently, in a solution in which a general-purpose server is used as a BBU in a base station, a method for adding an acceleration module in the general-purpose server is usually used to improve a data processing capability of the base station. FIG. 2 shows a schematic structural diagram of a general-purpose server. An acceleration module is added by using a PCIE (Peripheral Component Interconnect Express, Peripheral Component Interconnect Express) interface in the general-purpose server. When the general-purpose server receives task data through an IO (input/output, input/output) interface, if the general-purpose server determines that the task data should be processed by the acceleration module, the task data is read by using a memory bus, and written into the acceleration module through a PICE bus. After the acceleration module finishes processing the task data, the processed task data is written into a memory of the general-purpose server.

In the foregoing general-purpose server, if there is relatively much task data that needs to be processed by the acceleration module, to accelerate a speed at which the general-purpose server processes the data, the foregoing task data is usually transmitted to another general-purpose server by using a switching network, where the foregoing task data is processed by an acceleration module in the another general-purpose server, and the processed task data is sent to the general-purpose server by the another general-purpose server. In the foregoing technical solution, when an amount of task data to be processed is relatively large, relatively large bandwidth of a switching network needs to be occupied to perform data exchange, thereby lowering system performance and increasing duration of data processing. In addition, if an acceleration module is set for each general-purpose server, acceleration modules in some of general-purpose servers are relatively idle, and acceleration modules in some of general-purpose servers are relatively busy, thereby leading to a problem of imbalanced distribution of system resources and causing resource waste. In conclusion, a problem of low system performance, long data processing duration, and system resource waste currently exists in a data processing process.

### SUMMARY

Embodiments of the present invention provide a data processing apparatus and a data processing method, to resolve a problem of low system performance, long data processing duration, and system resource waste that currently exists in a data processing process.

According to a first aspect, a data processing apparatus is provided, including:
at least two data processing modules (30), respectively connected to corresponding general-purpose servers (2'), and configured to receive task data sent by the general-purpose servers (2') and process the task data; a switching module (32), separately connected to the at least two data processing modules (30), and configured to receive a quantity of to-be-processed tasks reported by each data processing module (30) and report the quantity of to-be-processed tasks corresponding to each data processing module (30) to a scheduling module (31); and the scheduling module (32), connected to the switching module (32), and configured to: according to the quantity of to-be-processed tasks corresponding to each data processing module (30) reported by the switching module (32), and when it is determined that the quantity of to-be-processed tasks corresponding to any data processing module (30) reaches a preset threshold, acquire an identifier of any other data processing module (30) whose quantity of to-be-processed tasks does not reach the preset threshold and send the acquired identifier of the data processing module (30) to the switching module (31); where the switching module (31) is further configured to receive the identifier of the data processing module (30) sent by the scheduling module (32) and send task data processed by the data processing module (30) whose quantity of to-be-processed tasks reaches the preset threshold to the data processing module (30) corresponding to the received identifier of the data processing module (30) for processing.

With reference to the first aspect, in a first possible implementation manner, the scheduling module (32) is specifically configured to: acquire identifiers respectively corresponding to data processing modules (30) whose quantities of to-be-processed tasks do not reach the preset threshold; and randomly select an identifier of any data processing module (30) from the acquired identifiers respectively corresponding to the data processing modules (30) as the acquired identifier of the any other data processing module (30) whose quantity of to-be-processed tasks does not reach the preset threshold; or select an identifier of a data processing module (30) having a minimum quantity of to-be-processed tasks from the identifiers respectively corresponding to the data processing modules (30) whose quantities of to-be-processed tasks do not reach the preset threshold as the acquired identifier of the any other data processing module (30) whose quantity of to-be-processed tasks does not reach the preset threshold.

With reference to the first possible implementation manner of the first aspect, in a second possible implementation manner, the apparatus further includes at least two handover modules (33), where each handover module (33) is located between a data processing module (30) and a general-purpose server (2') corresponding to the data processing module (30), and is connected to the switching module (31), where each handover module (33) is configured to: when the scheduling module (32) determines that a quantity of to-be-processed tasks corresponding to the data processing module (30) connected to each handover module (33) reaches the preset threshold, switch from sending the task data that is sent by the general-purpose server (2') connected to each handover module (33) to the data processing module (30) connected to each handover module (33) to sending the task data to the switching module (31).

With reference to the second possible implementation manner of the first aspect, in a third possible implementation manner, the handover module (33) uses a switching chip.

With reference to the first possible implementation manner, the second possible implementation manner, or the third possible implementation manner of the first aspect, in a fourth possible implementation manner, the task data further carries a destination address corresponding to the task data and the destination address is address information of a destination device to which processed task data should be transmitted after processing of the task data is complete, and the data processing module (30) is further configured to: if the destination address is an identifier of a general-purpose server (2'), and after the processing of the task data is complete, send the locally processed task data to the general-purpose server (2') corresponding to the identifier of the general-purpose server (2').

With reference to the fourth possible implementation manner of the first aspect, in a fifth possible implementation manner, the data processing module (30) is further configured to: if the destination address is an address of a radio remote unit RRU, send the locally processed task data to the RRU corresponding to the address of the RRU by using a switching network (3'); or, if the destination address is an address of a core network CN device, send the locally processed task data to the CN device corresponding to the address of the CN device by using the switching network (3'). With reference to the first possible implementation manner, the second possible implementation manner, the third possible implementation manner, the fourth possible implementation manner, or the fifth possible implementation manner of the first aspect, in a sixth possible implementation manner, the data processing module (30) uses an accelerator AC.

With reference to the first possible implementation manner, the second possible implementation manner, the third possible implementation manner, the fourth possible implementation manner, the fifth possible implementation manner, or the sixth possible implementation manner of the first aspect, in a seventh possible implementation manner, the switching module (31) uses a Peripheral Component Interconnect Express PCIE switching chip SW.

With reference to the first possible implementation manner, the second possible implementation manner, the third possible implementation manner, the fourth possible implementation manner, the fifth possible implementation manner, the sixth possible implementation manner, or the seventh possible implementation manner of the first aspect, in an eighth possible implementation manner, the scheduling module (32) uses an advanced reduced instruction set computing machine ARM.

According to a second aspect, a data processing method is provided, including:
separately acquiring a quantity of to-be-processed tasks corresponding to each data processing module (30); when it is determined that the quantity of to-be-processed tasks corresponding to any data processing module (30) reaches a preset threshold, and if the any data processing module (30) receives task data sent by a corresponding general-purpose server (2'), acquiring an identifier of any other data processing module (30) whose quantity of to-be-processed tasks does not reach the preset threshold; and forwarding the task data that is sent to the any data processing module (30) whose quantity of to-be-processed tasks reaches the preset threshold to the data processing module (30) corresponding to the acquired identifier of the data processing module (30) for processing.

With reference to the second aspect, in a first possible implementation manner, identifiers respectively corresponding to data processing modules (30) whose quantities of to-be-processed tasks do not reach the preset threshold are acquired; and an identifier of any data processing module (30) is randomly selected from the acquired identifiers respectively corresponding to the data processing modules (30) as the acquired identifier of the any other data processing module (30) whose quantity of to-be-processed tasks does not reach the preset threshold; or an identifier of a data processing module (30) having a minimum quantity of to-be-processed tasks is selected from the identifiers respectively corresponding to the data processing modules (30) whose quantities of to-be-processed tasks do not reach the preset threshold as the acquired identifier of the any other data processing module (30) whose quantity of to-be-processed tasks does not reach the preset threshold.

With reference to the first possible implementation manner of the second aspect, in a second possible implementation manner, the task data further carries a destination address corresponding to the task data and the destination address is address information of a destination device to which processed task data should be transmitted after processing of the task data is complete; and after the processing of the task data is complete, the method further includes: if the destination address is an identifier of a general-purpose server (2'), determining that the processed task data needs to be returned to the general-purpose server (2'); and sending the processed task data to the general-purpose server (2') corresponding to the identifier of the general-purpose server (2').

With reference to the second possible implementation manner of the second aspect, in a third possible implementation manner, after the processing of the task data is complete, if the destination address is an address of a radio remote unit RRU, the processed task data is sent to the RRU corresponding to the address of the RRU by using a switching network (3'); or if the destination address is an address of a core network CN device, the processed task data is sent to the CN device corresponding to the address of the CN device by using the switching network (3').

With reference to the first possible implementation manner, the second possible implementation manner, or the third possible implementation manner of the second aspect, in a fourth possible implementation manner, when it is determined that the quantity of to-be-processed tasks corresponding to any data processing module (30) does not reach the preset threshold, the task data is processed by the any data processing module (30).

In the embodiments of the present invention, a data processing apparatus includes a data processing module, a switching module, and a scheduling module. The scheduling module coordinates a quantity of tasks corresponding to each data processing module. When a quantity of to-be-processed tasks corresponding to any data processing module reaches a preset threshold, the scheduling module instructs the switching module to send task data received by the foregoing any data processing module to a data processing module whose quantity of to-be-processed tasks does not reach the preset threshold for processing. In the foregoing technical solution, each general-purpose server corresponds to one data processing module. When a quantity of tasks corresponding to a data processing module is relatively large, the scheduling module controls the switching module to dispatch task data to a relatively idle data processing module, thereby avoiding a problem of system resource waste.

### BRIEF DESCRIPTION OF DRAWINGS

FIG. 1 is a schematic structural diagram of a base station in the prior art;
FIG. 2 is a schematic structural diagram of a general-purpose server in the prior art;
FIG. 3 is an architecture diagram 1 of a data processing system according to an embodiment of the present invention;
FIG. 4 is an architecture diagram 2 of a data processing system according to an embodiment of the present invention;
FIG. 5 is a structural diagram 3 of a data processing system according to an embodiment of the present invention;
FIG. 6 is a schematic structural diagram of a data processing device according to an embodiment of the present invention;
FIG. 7 is a flowchart 1 of data processing according to an embodiment of the present invention; and
FIG. 8A and FIG. 8B are a flowchart 2 of data processing according to an embodiment of the present invention.

### DESCRIPTION OF EMBODIMENTS

To resolve a problem of low system performance, long data processing duration, and system resource waste that currently exists in a data processing process, in the embodiments of the present invention, a data processing apparatus includes a data processing module, a switching module, and a scheduling module. The scheduling module coordinates a quantity of tasks corresponding to each data processing module. When a quantity of to-be-processed tasks corresponding to any data processing module reaches a preset threshold, the scheduling module instructs the switching module to send task data received by the foregoing any data processing module to a data processing module whose quantity of to-be-processed tasks does not reach the preset threshold for processing. In the foregoing technical solution, each general-purpose server corresponds to one data processing module. When a quantity of tasks corresponding to any data processing module is relatively large, the scheduling module controls the switching module to dispatch task data to any relatively idle data processing module, thereby avoiding a problem of system resource waste.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

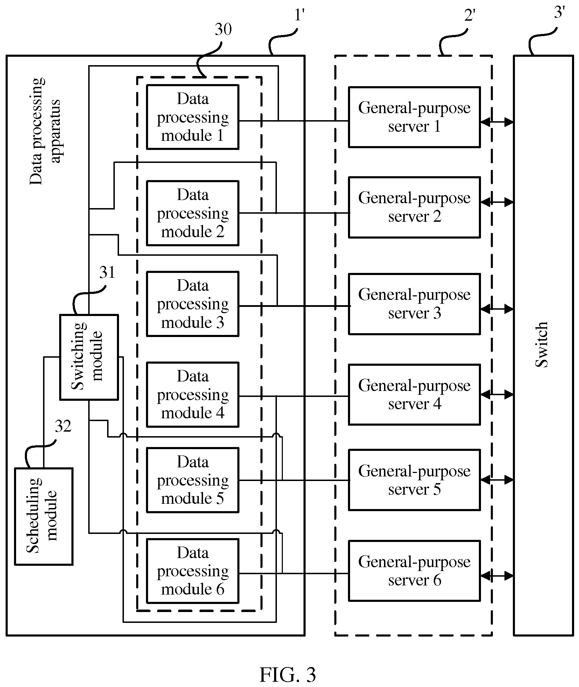

FIG. 3 shows an architecture diagram of a data processing system according to an embodiment of the present invention, where the data processing system includes a data processing apparatus 1', a general-purpose server 2', and a switch 3'.

Referring to FIG. 3, in this embodiment of the present invention, the data processing apparatus 1' includes at least two data processing modules 30, a switching module 31, and a scheduling module 32. The data processing modules 30 are respectively connected to corresponding general-purpose servers 2'; the switching module 31 is separately connected to all data processing modules 30 in the foregoing data processing apparatus 1'; and the scheduling module 32 is connected to the switching module 31 in the foregoing data processing apparatus 1'.

Optionally, each data processing module 30 is connected to one or more general-purpose servers 2' and configured to receive task data sent by a corresponding general-purpose server 2' and process the task data. For example, referring to FIG. 3, a data processing module 1 is corresponding to a general-purpose server 1, and a data processing module 2 is corresponding to a general-purpose server 2. The data processing module 1 receives task data sent by the general-purpose server 1, and the data processing module 2 receives task data sent by the general-purpose server 2. The foregoing data processing module 30 may include one AC (Accelerator, accelerator) and one memory. The AC is configured to process the task data received by the data processing module 30 and the memory is configured to store a to-be-processed task queue. That is, after the data processing module 30 receives the task data that is sent by the corresponding general-purpose server 2', a to-be-processed task corresponding to the task data is added to the to-be-processed task queue stored in the memory, and the AC sequentially processes the task data corresponding to to-be-processed tasks in the foregoing to-be-processed task queue.

Optionally, the switching module 31 is configured to receive a quantity of local to-be-processed tasks reported by each data processing module 30, that is, to receive a length of a locally saved to-be-processed task queue reported by each data processing module 30. The foregoing switching module 31 may be implemented by using a PCIE (Personal Computer Interface Express, Peripheral Component Interconnect Express) SW (Switch, switching chip).

Optionally, the scheduling module 32 is configured to: receive the quantity of to-be-processed tasks corresponding to each data processing module 30 sent by the switching module 31 and locally save the quantities of to-be-processed tasks respectively corresponding to all data processing modules 30, if it is determined that the quantity of to-be-processed tasks corresponding to any data processing module 30 reaches a preset threshold, when it is detected that the any data processing module 30 receives task data sent by a corresponding general-purpose server 2', acquire an identifier of any other data processing module 30 whose quantity of to-be-processed tasks does not reach the preset threshold, and send the acquired identifier of the data processing module 30 to the switching module 31. For example, referring to FIG. 3, when the general-purpose server 1 sends task data to the data processing module 1, the scheduling module 33 queries the locally saved quantities of to-be-processed tasks corresponding to all data processing modules 30 and when it is determined that a quantity of to-be-processed tasks corresponding to the data processing module 1 reaches the preset threshold, sends an identifier of the data processing module 1 to the switching module 31, and instructs the switching module 31 to send the task data received by the foregoing data processing module 1 to the any other data processing module 30 (such as a data processing module 4) whose quantity of to-be-processed tasks does not reach the preset threshold. The data processing module 4 processes the foregoing task data. The foregoing preset threshold may be preset according to a specific application scenario. The foregoing scheduling module 32 may be implemented by using an ARM (Advanced RISC Machines, advanced reduced instruction set computing machine).

Optionally, the foregoing switching module 31 is further configured to receive the identifier of the data processing module 30 sent by the scheduling module 32 and send task data processed by the data processing module 30 whose quantity of to-be-processed tasks reaches the preset threshold to the data processing module 30 corresponding to the received identifier of the data processing module 30 for processing. For example, referring to FIG. 3, after selecting a data processing module 6 from all data processing modules 30 whose quantities of to-be-processed tasks do not reach the preset threshold, the foregoing scheduling module 32 sends an identifier of the data processing module 6 to the switching module 31, and the switching module 31 sends the foregoing task data to the data processing module 6 according to the received identifier of the data processing module 6.

In the foregoing technical solution, all data processing modules 30 are managed by using a unified data processing apparatus 1', thereby avoiding a problem in the prior art that an upgrade process is cumbersome due to upgrade of data processing modules 30 in multiple general-purpose data devices, and reducing subsequent maintenance complexity and maintenance time for the data processing apparatus 1'.

Optionally, one statistics collection submodule is disposed in each of the foregoing data processing modules 30, where the statistics collection submodule is configured to count a quantity of to-be-processed tasks corresponding to a data processing module 30 to which the statistics collection submodule belongs, and report the quantity of to-be-processed tasks to the switching module 31. The statistics collection submodule may report the quantity of to-be-processed tasks to the scheduling module 31 according to a preset period. The statistics collection submodule may also count, when the data processing module 30 to which the statistics collection submodule belongs receives new task data, a quantity of to-be-processed tasks corresponding to the data processing module 30, and report the quantity of to-be-processed tasks to the switching module 31. Correspondingly, when receiving the quantity of to-be-processed tasks that is sent by the statistics collection submodule, the switching module 31 sends the quantity of to-be-processed tasks to the scheduling module 32. The scheduling module 32 updates, according to the quantity of to-be-processed tasks, a locally saved quantity of to-be-processed tasks corresponding to the data processing module 30 to which the foregoing statistics collection submodule belongs. When the scheduling module 32 does not receive a quantity of to-be-processed tasks that is sent by the statistics collection submodule included in any data processing module 30, it indicates that the quantity of to-be-processed tasks corresponding to the any data processing module 30 does not change and there is no need to update the quantity of to-be-processed tasks that is corresponding to the foregoing any data processing module 30 and that is locally saved by the scheduling module 32.

In the foregoing technical solution, the statistics collection submodule in the data processing module 30 monitors the quantity of to-be-processed tasks corresponding to the data processing module 30, thereby facilitating subsequent unified scheduling that is performed by the scheduling module 32 on the task data.

Optionally, when the scheduling module 32 selects an identifier of any data processing module 30 from identifiers of all data processing modules 30 whose quantities of to-be-processed tasks do not reach the preset threshold, the scheduling module 32 may randomly select the identifier of any data processing module 30 or may select an identifier of a data processing module 30 having a minimum quantity of to-be-processed tasks from the foregoing identifiers of all data processing modules 30 whose quantities of to-be-processed tasks do not reach the preset threshold. For example, referring to FIG. 3, if a data processing module 1 receives task data that is sent by the general-purpose server 1, and when the scheduling module 32 determines that a quantity of to-be-processed tasks corresponding to the data processing module 1 reaches the preset threshold, a data processing module 3, a data processing module 4, and a data processing module 6 whose quantities of to-be-processed tasks do not reach the preset threshold are acquired. The data processing module 6 having a minimum quantity of to-be-processed tasks is selected from the data processing module 3, the data processing module 4, and the data processing module 6. The switching module 31 sends the task data received by the foregoing data processing module 1 whose quantity of to-be-processed tasks reaches the preset threshold to the data processing module 6. The data processing module 6 processes the foregoing task data.

Further, after instructing the switching module 31 to forward the task data to a data processing module 30 corresponding to the identifier of any data processing module 30 whose quantity of to-be-processed tasks does not reach the preset threshold, the scheduling module 32 instructs the switching module 31 to transfer a task corresponding to the foregoing task data to the foregoing selected data processing module 30.

Further, the data processing module 30 is further configured to: when the quantity of to-be-processed tasks corresponding to the data processing module 30 that is corresponding to the general-purpose server 2' does not reach the preset threshold, process the foregoing task data by the data processing module 30 whose quantity of to-be-processed tasks does not reach the preset threshold.

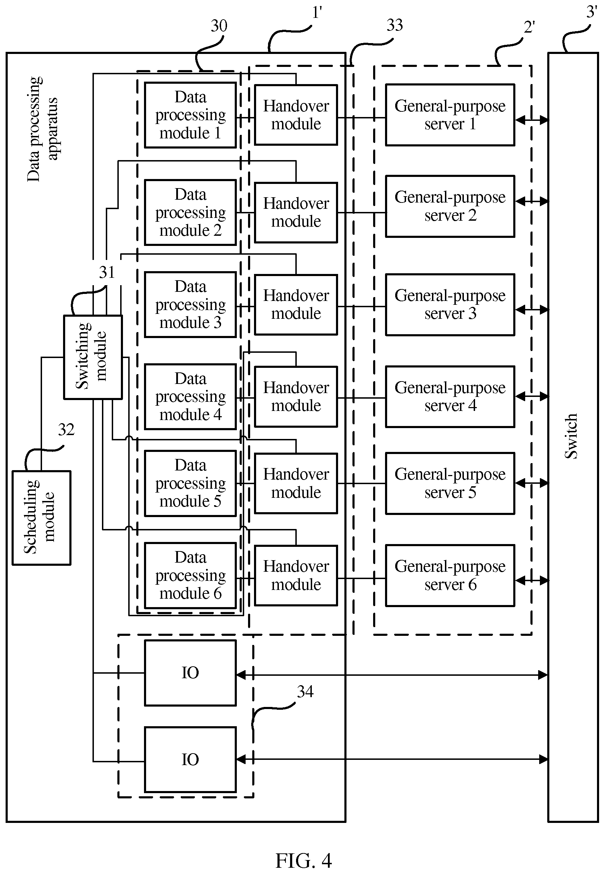

Further, referring to FIG. 4, the foregoing data processing apparatus 1' further includes at least two handover modules 33 that are located between a data processing module 30 and a general-purpose server 2' corresponding to the data processing module 30, and are connected to a switching module 31. The handover module 33 is configured to: when the scheduling module 32 determines that a quantity of to-be-processed tasks corresponding to the foregoing data processing module 30 reaches the preset threshold, switch, according to an instruction sent by the scheduling module 32, from sending the foregoing task data to the data processing module 30 corresponding to the general-purpose server 2' to sending the foregoing task data to the switching module 31. For example, when a quantity of to-be-processed tasks corresponding to the foregoing data processing module 6 reaches the preset threshold and the data processing module 6 still receives task data that is sent by a corresponding general-purpose server 2', the scheduling module 32 instructs a handover module 33 to switch from sending the task data to the data processing module 6 to sending the task data to the switching module 31. The foregoing handover module 33 may be implemented by using a switching chip.

Optionally, the handover module 33 may learn, by using a statistics collection submodule locally disposed in a data processing module 30 corresponding to the handover module 33, whether a quantity of to-be-processed tasks corresponding to the handover module 33 reaches the preset threshold, so as to determine whether to change a receiver of the task data. Alternatively, the scheduling module 32 is further configured to: when the quantity of to-be-processed tasks corresponding to any data processing module 30 reaches the preset threshold, generate a handover instruction and send the handover instruction to the handover module 33, and the handover module 33 determines, based on the handover instruction, to change the receiver of the task data.

In the foregoing technical solution, task data sent by a general-purpose server 2' is sent, by using a switching module 31, a scheduling module 32, and a handover module 33, to a relatively idle data processing module 30 for processing, thereby avoiding a problem of imbalanced resource allocation that is caused by the fact that some data processing module(s) 30 are idle, whereas some data processing module(s) 30 are busy. In addition, sending the task data to the idle processing module 30 for processing shortens task data processing duration and improves system performance. Moreover, exchange of the task data between the general-purpose server 2' and a data processing apparatus 1' and exchange of processed task data are completed by using a cable, and a transmission process is quick and convenient without occupying system bandwidth, reducing consumption of system resources.

Further, the data processing module 30 is further configured to: after processing of the foregoing task data is complete, determine whether the processed task data needs to be returned to the general-purpose server 2'. Optionally, the data processing module 30 determines, according to a destination address carried in a specific field in to-be-processed task data, a receiving device of the processed task data, where the destination address is address information of a destination device to which processed task data should be transmitted after processing of the task data is complete. When it is determined that the processed task data needs to be returned to the general-purpose server 2' (that is, the destination address is an identifier of the general-purpose server 2'), an identifier of a general-purpose server carried in the task data is acquired, and the general-purpose server 2' corresponding to the identifier of the general-purpose server 2' and a data processing module 30 corresponding to the general-purpose server 2' are determined. The foregoing processed task data is sent, by using the data processing module 30 corresponding to the general-purpose server 2', to the general-purpose server 2'. When it is determined that the foregoing processed task data does not need to be returned to the general-purpose server 2' (that is, the destination address is a radio remote unit or a core network device), the foregoing processed task data is sent to a radio remote unit (RRU) or a core network device (CN) by using a switching network. For example, referring to FIG. 4, after the data processing module 6 finishes processing task data sent by a general-purpose server 1, if the foregoing task data carries a destination address, the scheduling module 32 instructs the switching module 31 to send the foregoing processed task data from the data processing module 6 to a data processing module 1 corresponding to the general-purpose server 1, and the data processing module 1 sends the foregoing processed task data to the general-purpose server 1. If the destination address carried in the foregoing processed task data is a radio remote unit, the scheduling module 32 sends the foregoing processed task data to the radio remote unit. The foregoing switching network may be implemented by using a switch 3'.

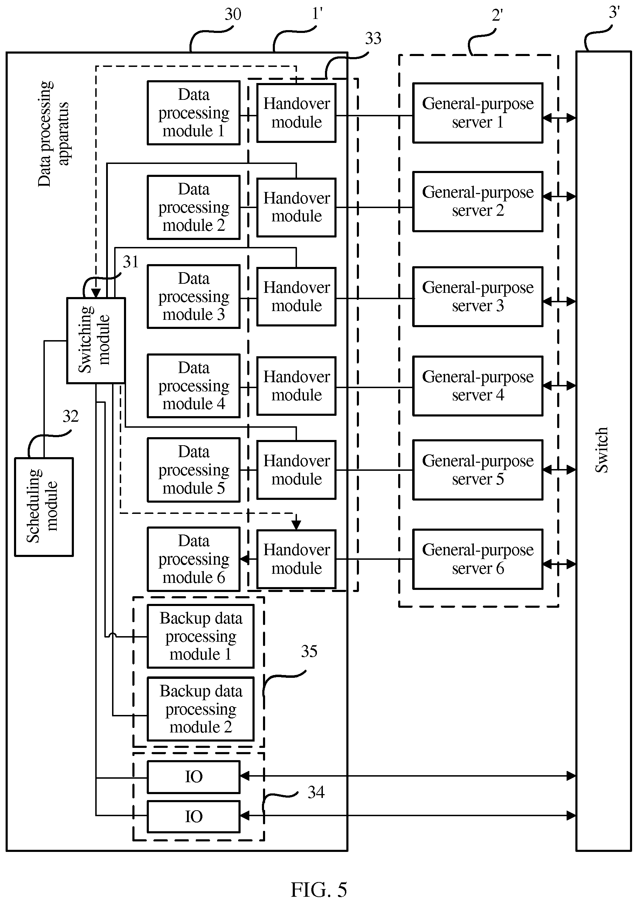

Further, referring to FIG. 4, the foregoing data processing apparatus 1' further includes an IO (Input/Output, input/output) module 34, which is configured to send the processed task data to the switching network and send the processed task data to the radio remote unit or the core network device by using the switching network. Further, referring to FIG. 5, the foregoing data processing apparatus 1' further includes a backup data processing module 35, where the backup data processing module 35 is connected to the switching module 31 and is configured to: when a data processing module 30 encounters a fault, receive task data of the foregoing general-purpose server 2' for processing.

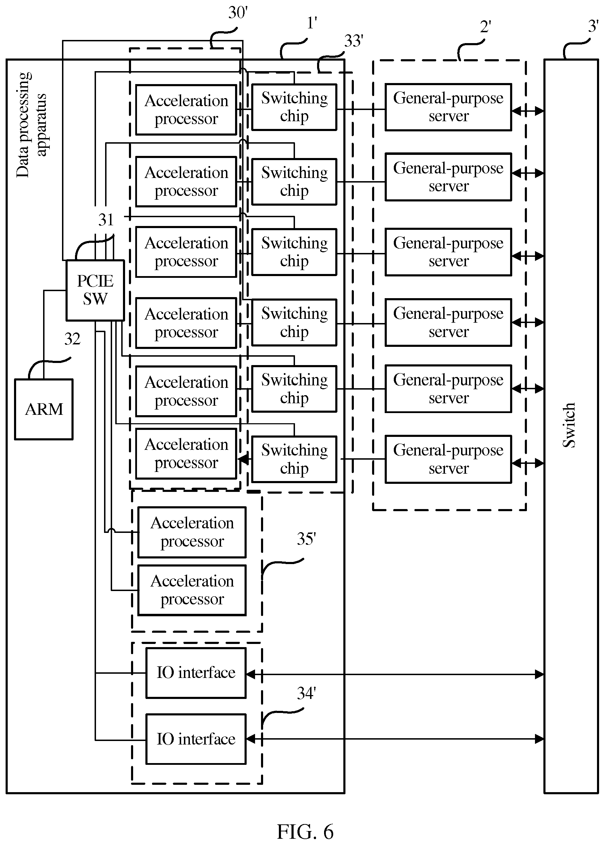

Based on the foregoing data processing apparatus, referring to FIG. 6, an embodiment of the present invention further provides a data processing device 1", and the data processing device 1" includes an acceleration processor 30', a PCIE SW 31', and an ARM 32'.

Each acceleration processor 30' is connected to one or more general-purpose servers 2', and is configured to receive task data sent by a corresponding general-purpose server 2' and process the task data. The foregoing acceleration processor 30' may include an AC, or may include an AC and a memory, where the AC is configured to process the task data sent by the general-purpose server 2' and the memory is configured to store a to-be-processed task queue, that is, after the general-purpose server 2' sends the task data, to add a to-be-processed task corresponding to the task data to the to-be-processed task queue stored in the memory. The AC sequentially processes the task data corresponding to all to-be-processed tasks in the foregoing to-be-processed task queue.

The PCIE SW 31' is separately connected to each acceleration processor 30', and is configured to receive a quantity of local to-be-processed tasks reported by each acceleration processor 30'.

The ARM 31' is connected to the PCIE SW 31', and is configured to: receive a quantity of to-be-processed tasks corresponding to each acceleration processor 30' sent by the PCIE SW 31' and locally save the quantities of to-be-processed tasks respectively corresponding to all acceleration processors 30'; if it is determined that the quantity of to-be-processed tasks corresponding to any acceleration processor 30' reaches a preset threshold, acquire, when it is detected that the any acceleration processor 30' receives task data sent by a corresponding general-purpose server 2', an identifier of any other acceleration processor 30' whose quantity of to-be-processed tasks does not reach the preset threshold, and send the acquired identifier of the acceleration processor 30' to the PCIE SW 31'.

Optionally, the foregoing PCIE SW 31' is further configured to receive the identifier of the acceleration processor 30' sent by the ARM 32' and send task data processed by the acceleration processor 30' whose quantity of to-be-processed tasks reaches the preset threshold to the acceleration processor 30' corresponding to the received identifier of the acceleration processor 30' for processing.

Further, the foregoing data processing device 1" further includes at least two switching chips 33', where a switching chip 33' is located between an acceleration processor 30' and a general-purpose server 2' corresponding to the acceleration processor 30', and is connected to the PCIE SW 31'. The switching chip 33' is configured to: when the ARM 32' determines that the quantity of to-be-processed tasks corresponding to the foregoing acceleration processor 30' reaches the preset threshold, switch, according to an instruction sent by the ARM 32', from sending the foregoing task data to the acceleration processor 30' corresponding to the general-purpose server 2' to sending the foregoing task data to the PCIE SW 31'. Further, referring to FIG. 6, the foregoing data processing device 1" further includes an IO interface 34', which is configured to send processed task data to a switching network, and the switching network sends the processed task data to a radio remote unit or a core network device.

Further, referring to FIG. 6, the foregoing data processing device 1" further includes a backup acceleration processor 35', where the backup acceleration processor 35' is connected to the PCIE SW 31' and is configured to: when an acceleration processor 30' encounters a fault, receive task data of the foregoing general-purpose server 2' for processing.

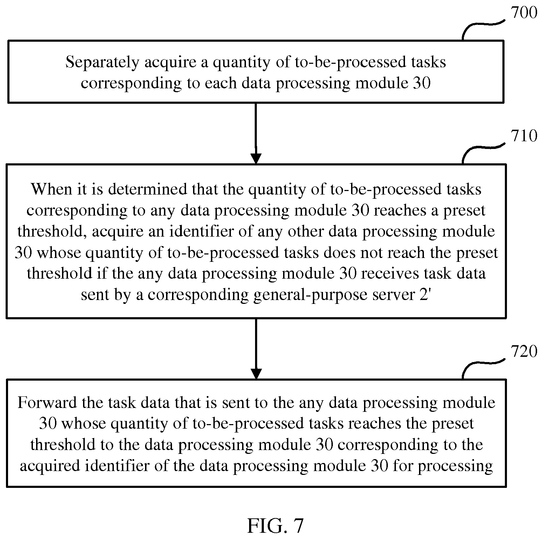

Based on the foregoing technical solution, referring to FIG. 7, in an embodiment of the present invention, a data processing process is:
Step 700: Separately acquire a quantity of to-be-processed tasks corresponding to each data processing module 30.

Referring to FIG. 5, in this embodiment of the present invention, the data processing apparatus 1' includes at least two data processing modules 30, and each data processing module 30 is connected to one or more general-purpose servers 2'. That is, a correspondence exists between a general-purpose server 2' and a data processing module 30.

Optionally, a PCIE extension cable is added to a PCIE slot of the general-purpose server 2', where the PCIE extension cable is connected to the data processing module 30. When determining, according to an attribute parameter of task data, that the task data should be processed by the data processing apparatus 1', the general-purpose server 2' sends the task data to the data processing module 30 by using the local PCIE extension cable of the general-purpose server 2'. The attribute parameter of the foregoing task data includes a degree of parallelism of the task data, or a quantity of bits of the task data, and the like.

Optionally, a switching module 31 and a scheduling module 32 are added to the data processing apparatus 1'. The switching module 31 is connected to all data processing modules 30, and is configured to receive a quantity of to-be-processed tasks corresponding to each data processing module 30 and send the quantity of to-be-processed tasks to the scheduling module 32. The scheduling module 32 is connected to the switching module 31, and is configured to schedule the foregoing task data according to the quantity of to-be-processed tasks corresponding to each data processing module 30.

Optionally, after the data processing module 30 receives the foregoing task data, a to-be-processed task corresponding to the task data is added to a local to-be-processed task queue and the quantity of to-be-processed tasks included in the to-be-processed task queue is sent to the switching module 31. The switching module 31 forwards the quantity of to-be-processed tasks respectively corresponding to data processing modules 30 to the scheduling module 32, and the scheduling module 32 acquires the quantity of to-be-processed tasks corresponding to each data processing module 30 by using a length of the local to-be-processed task queue reported by each data processing module 30.

Step 710: When it is determined that the quantity of to-be-processed tasks corresponding to any data processing module 30 reaches a preset threshold, acquire an identifier of any other data processing module 30 whose quantity of to-be-processed tasks does not reach the preset threshold if the any data processing module 30 receives task data sent by a corresponding general-purpose server 2'.

In this embodiment of the present invention, a handover module 33 is added to the data processing apparatus 1'. The switching module 31 is further configured to forward the task data according to an instruction sent by the scheduling module 32. The handover module 33 is located between a data processing module 30 and a general-purpose server 2' corresponding to the data processing module 30, and is configured to: according to the instruction of the scheduling module 32 or an instruction of the data processing module 30, implement task data exchange between the general-purpose server 2' and the data processing module 30, or implement task data exchange between the general-purpose server 2' and the switching module 31. Optionally, when determining that the quantity of to-be-processed tasks corresponding to the foregoing data processing module 30 reaches the preset threshold, the scheduling module 32 sends a handover instruction to a handover module 33 corresponding to the data processing module 30, so as to instruct the handover module 33 to send the foregoing task data to the switching module 31. Alternatively, the data processing module 30 learns, according to a locally disposed statistics collection submodule, whether the quantity of to-be-processed tasks corresponding to the data processing module 30 reaches the preset threshold; and when the quantity of to-be-processed tasks reaches the preset threshold, sends a handover instruction to the handover module 33, so as to instruct the handover module 33 to send the foregoing task data to the switching module 31.

Optionally, the scheduling module 32 acquires identifiers of all data processing modules 30 whose quantities of to-be-processed tasks do not reach the preset threshold, and selects an identifier of any data processing module 30 from the identifiers of all data processing modules 30 whose quantities of to-be-processed tasks do not reach the preset threshold. The scheduling module 32 sends the selected identifier of the any data processing module 30 to the switching module 31.

Step 720: Forward the task data that is sent to the any data processing module 30 whose quantity of to-be-processed tasks reaches the preset threshold to the data processing module 30 corresponding to the acquired identifier of the data processing module 30 for processing.

In this embodiment of the present invention, after acquiring the selected identifier of the any data processing module 30 sent by the scheduling module 32, the switching module 31 sends the foregoing task data to the data processing module 30 corresponding to the selected identifier of the any data processing module 30, so as to instruct the selected data processing module 30 to process the foregoing task data. For example, referring to FIG. 5, the scheduling module 32 queries a locally saved quantity of to-be-processed tasks corresponding to a data processing module 1. When it is determined that the quantity of to-be-processed tasks corresponding to the foregoing data processing module 1 reaches the preset threshold, and if a general-purpose server 1 sends task data to the data processing module 1 in the data processing apparatus 1', the scheduling module 32 acquires a data processing module 6 whose quantity of to-be-processed tasks does not reach the preset threshold, and instructs the switching module 31 to forward the foregoing task data to the data processing module 6. A transmission process of the task data is specifically shown by dashed lines in FIG. 5.

In the foregoing technical solution, task data sent by a general-purpose server 2' is sent, by using a switching module 31, a scheduling module 32, and a handover module 33, to a relatively idle data processing module 30 for processing, thereby avoiding a problem of imbalanced resource allocation that is caused by the fact that some data processing module(s) 30 are idle, whereas some data processing module(s) 30 are busy. In addition, sending the task data to the idle processing module 30 for processing shortens task data processing duration and improves system performance. Moreover, exchange of the task data between the general-purpose server 2' and a data processing apparatus 1' and exchange of processed task data are completed by using a cable, and a transmission process is quick and convenient without occupying system bandwidth, reducing consumption of system resources.

Further, when the quantity of to-be-processed tasks corresponding to the data processing module 30 that is corresponding to the general-purpose server 2' does not reach the preset threshold, the task data is processed by the data processing module 30 corresponding to the general-purpose server 2'.

Further, after processing of the task data is complete, it is determined, according to a destination address carried in a to-be-processed task corresponding to the task data, whether the processed task data needs to be returned to the general-purpose server 2'. When it is determined that the foregoing processed task data needs to be returned to the general-purpose server 2', an identifier of the general-purpose server 2' carried in the foregoing task data is acquired, the general-purpose server 2' corresponding to the identifier of the general-purpose server 2' and a data processing module 30 corresponding to the general-purpose server 2' are determined, and the foregoing processed task data is sent to the general-purpose server 2' by using the data processing module 30 corresponding to the general-purpose server 2'. When it is determined that the foregoing processed task data does not need to be returned to the general-purpose server 2', the foregoing processed task data is sent to a radio remote unit (RRU) or a core network (CN) device by using a switching network.

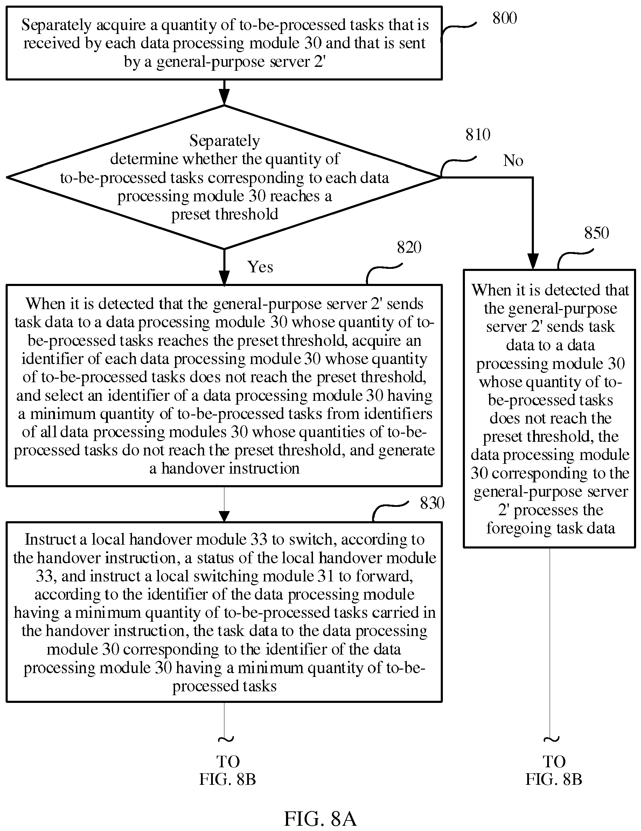

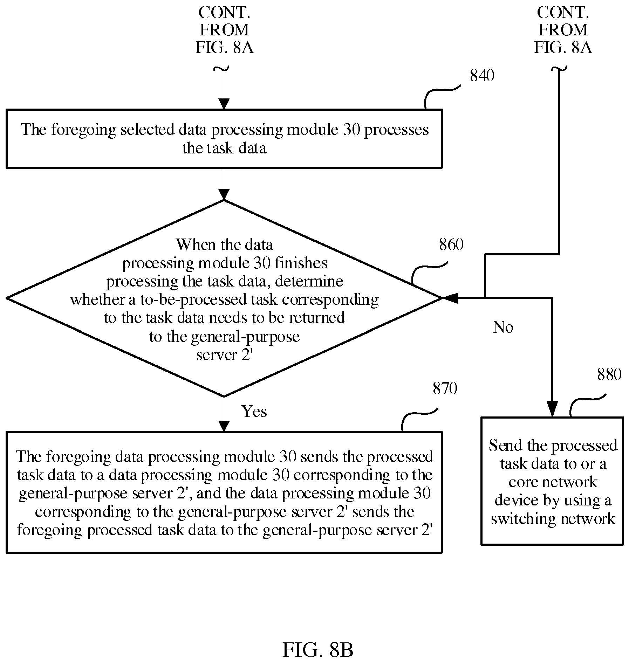

Based on the foregoing technical solution, referring to FIG. 8A and FIG. 8B, the following describes a data processing process in detail with reference to a specific application scenario.

Step 800: Separately acquire a quantity of to-be-processed tasks corresponding to each data processing module 30.

Step 810: Separately determine whether the quantity of to-be-processed tasks corresponding to each data processing module 30 reaches a preset threshold; if the quantity of to-be-processed tasks corresponding to each data processing module 30 reaches the preset threshold, step 820 is executed; otherwise, step 850 is executed. Step 820: When it is detected that a general-purpose server 2' sends task data to a data processing module 30 whose quantity of to-be-processed tasks reaches the preset threshold, acquire an identifier of each data processing module 30 whose quantity of to-be-processed tasks does not reach the preset threshold, select an identifier of a data processing module 30 having a minimum quantity of to-be-processed tasks from identifiers of all data processing modules 30 whose quantities of to-be-processed tasks do not reach the preset threshold, and generate a handover instruction.

Step 830: Instruct a local handover module 33 to switch, according to the handover instruction, a status of the local handover module 33, and instruct a local switching module 31 to forward, according to the identifier of the data processing module 30 having a minimum quantity of to-be-processed tasks carried in the handover instruction, the task data to the data processing module 30 corresponding to the identifier of the data processing module having a minimum quantity of to-be-processed tasks.

Step 840: The foregoing selected data processing module 30 processes the task data.

Step 850: When it is detected that the general-purpose server 2' sends task data to a data processing module 30 whose quantity of to-be-processed tasks does not reach the preset threshold, the data processing module 30 corresponding to the general-purpose server 2' processes the foregoing task data.

Step 860: When the data processing module 30 finishes processing the task data, determine whether a to-be-processed task corresponding to the task data needs to be returned to the general-purpose server 2'; if the to-be-processed task corresponding to the task data needs to be returned to the general-purpose server 2', step 870 is executed; if the to-be-processed task corresponding to the task data does not need to be returned to the general-purpose server 2', step 880 is executed.

Step 870: The foregoing data processing module 30 sends the processed task data to a data processing module 30 corresponding to the general-purpose server 2', and the data processing module 30 corresponding to the general-purpose server 2' sends the foregoing processed task data to the general-purpose server 2'.

Step 880: Send the processed task data to or a core network device by using a switching network.

In conclusion, each data processing module receives task data sent by a corresponding general-purpose server; a quantity of to-be-processed tasks corresponding to each data processing module is separately acquired, and when it is determined that the quantity of to-be-processed tasks corresponding to any data processing module reaches a preset threshold, an identifier of any other data processing module whose quantity of to-be-processed tasks does not reach the preset threshold is acquired; the task data sent to the data processing module whose quantity of to-be-processed tasks reaches the preset threshold is forwarded to the data processing module corresponding to the acquired identifier of the data processing module for processing. In the foregoing technical solution, each general-purpose server corresponds to one data processing module. When a quantity of tasks corresponding to any data processing module is relatively large, a scheduling module controls a switching module to dispatch task data to any relatively idle data processing module, thereby avoiding a problem of system resource waste. In addition, because the data processing module, the switching module, and the scheduling module are interconnected by using cables, there is no need to transmit the task data by using a wireless network, so that data processing duration is shortened and system performance is improved.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A data processing apparatus, comprising:
at least two data processing modules (30), respectively connected to corresponding general-purpose servers (2'), and configured to receive task data sent by the general-purpose servers (2') and process the task data;
a switching module (32), separately connected to the at least two data processing modules (30), and configured to receive a quantity of to-be-processed tasks reported by each data processing module (30) and report the quantity of to-be-processed tasks corresponding to each data processing module (30) to a scheduling module (31); and
the scheduling module (32), connected to the switching module (32), and configured to: according to the quantity of to-be-processed tasks corresponding to each data processing module (30) reported by the switching module (32), and when it is determined that the quantity of to-be-processed tasks corresponding to any data processing module (30) reaches a preset threshold, acquire an identifier of any other data processing module (30) whose quantity of to-be-processed tasks does not reach the preset threshold and send the acquired identifier of the data processing module (30) to the switching module (31); wherein
the switching module (31) is further configured to receive the identifier of the data processing module (30) sent by the scheduling module (32) and send task data processed by the data processing module (30) whose quantity of to-be-processed tasks reaches the preset threshold to the data processing module (30) corresponding to the received identifier of the data processing module (30) for processing.

2. The apparatus according to claim 1, wherein the scheduling module (32) is specifically configured to:
acquire identifiers respectively corresponding to data processing modules (30) whose quantities of to-be-processed tasks do not reach the preset threshold; and
randomly select an identifier of any data processing module (30) from the acquired identifiers respectively corresponding to the data processing modules (30) as the acquired identifier of the any other data processing module (30) whose quantity of to-be-processed tasks does not reach the preset threshold; or select an identifier of a data processing module (30) having a minimum quantity of to-be-processed tasks from the identifiers respectively corresponding to the data processing modules (30) whose quantities of to-be-processed tasks do not reach the preset threshold as the acquired identifier of the any other data processing module (30) whose quantity of to-be-processed tasks does not reach the preset threshold.

3. The apparatus according to claim 2, wherein the apparatus further comprises at least two handover modules (33), wherein each handover module (33) is located between one data processing module (30) and one general-purpose server (2') corresponding to the data processing module (30), and is connected to the switching module (31), wherein each handover module (33) is configured to: when the scheduling module (32) determines that a quantity of to-be-processed tasks corresponding to the one data processing module (30) connected to each handover module (33) reaches the preset threshold, switch from sending the task data that is sent by the one general-purpose server (2') connected to each handover module (33) to the one data processing module (30) connected to each handover module (33) to sending the task data to the switching module (31).

4. The apparatus according to claim 3, wherein the handover module (33) uses a switching chip.

5. The apparatus according to any one of claims 1 to 4, wherein the task data further carries a destination address corresponding to the task data and the destination address is address information of a destination device to which processed task data should be transmitted after processing of the task data is complete, and the data processing module (30) is further configured to:
if the destination address is an identifier of a general-purpose server (2'), and after the processing of the task data is complete, send the locally processed task data to the general-purpose server (2') corresponding to the identifier of the general-purpose server (2').

6. The apparatus according to claim 5, wherein the data processing module (30) is further configured to:
if the destination address is an address of a radio remote unit RRU, send the locally processed task data to the RRU corresponding to the address of the RRU by using a switching network (3'); or
if the destination address is an address of a core network CN device, send the locally processed task data to the CN device corresponding to the address of the CN device by using the switching network (3').

7. The apparatus according to any one of claims 1 to 6, wherein the data processing module (30) uses an accelerator AC.

8. The apparatus according to any one of claims 1 to 7, wherein the switching module (31) uses a Peripheral Component Interconnect Express PCIE switching chip SW.

9. The apparatus according to any one of claims 1 to 8, wherein the scheduling module (32) uses an advanced reduced instruction set computing machine ARM.

10. A data processing method, comprising:
separately acquiring a quantity of to-be-processed tasks corresponding to each data processing module (30);
when it is determined that the quantity of to-be-processed tasks corresponding to any data processing module (30) reaches a preset threshold, and if the any data processing module (30) receives task data sent by a corresponding general-purpose server (2'), acquiring an identifier of any other data processing module (30) whose quantity of to-be-processed tasks does not reach the preset threshold; and
forwarding the task data that is sent to any data processing module (30) whose quantity of to-be-processed tasks reaches the preset threshold to the data processing module (30) corresponding to the acquired identifier of the data processing module (30) for processing.

11. The method according to claim 10, wherein the acquiring an identifier of any other data processing module (30) whose quantity of to-be-processed tasks does not reach the preset threshold specifically comprises:
acquiring identifiers respectively corresponding to data processing modules (30) whose quantities of to-be-processed tasks do not reach the preset threshold; and randomly selecting an identifier of any data processing module (30) from the acquired identifiers respectively corresponding to the data processing modules (30) as the acquired identifier of the any other data processing module (30) whose quantity of to-be-processed tasks does not reach the preset threshold; or selecting an identifier of a data processing module (30) having a minimum quantity of to-be-processed tasks from the identifiers respectively corresponding to the data processing modules (30) whose quantities of to-be-processed tasks do not reach the preset threshold as the acquired identifier of the any other data processing module (30) whose quantity of to-be-processed tasks does not reach the preset threshold.

12. The method according to claim 11, wherein the task data further carries a destination address corresponding to the task data and the destination address is address information of a destination device to which processed task data should be transmitted after processing of the task data is complete; and
after the processing of the task data is complete, the method further comprises:
if the destination address is an identifier of a general-purpose server (2'), determining that the processed task data needs to be returned to the general-purpose server (2'); and
sending the processed task data to the general-purpose server (2') corresponding to the identifier of the general-purpose server (2').

13. The method according to claim 12, after the processing of the task data is complete, further comprising:
if the destination address is an address of a radio remote unit RRU, sending the processed task data to the RRU corresponding to the address of the RRU by using a switching network (3'); or
if the destination address is an address of a core network CN device, sending the processed task data to the CN device corresponding to the address of the CN device by using the switching network (3').

14. The method according to any one of claims 10 to 13, further comprising:
when it is determined that the quantity of to-be-processed tasks corresponding to any data processing module (30) does not reach the preset threshold, processing, by the any data processing module (30), the task data.
